(19)

Europäisches
Patentamt
European
Patent Office
Office européen
des brevets

(11) **EP 2 709 411 A1**

(12) **EUROPEAN PATENT APPLICATION**
published in accordance with Art. 153(4) EPC

(43) Date of publication:
**19.03.2014 Bulletin 2014/12**

(21) Application number: **11865034.0**

(22) Date of filing: **05.12.2011**

(51) Int Cl.:
**H04W 72/04** *(2009.01)* **H04B 1/7136** *(2011.01)*

(86) International application number:
**PCT/CN2011/083474**

(87) International publication number:
**WO 2012/151971 (15.11.2012 Gazette 2012/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2011 CN 201110122634**

(71) Applicant: **ZTE Corporation
Shenzhen, Guangdong 518057 (CN)**

(72) Inventor: **FEI, Peiyan
Shenzhen, Guangdong 518057 (CN)**

(74) Representative: **Jansen, Cornelis Marinus et al
V.O.
Johan de Wittlaan 7
2517 JR Den Haag (NL)**

(54) **METHOD AND DEVICE FOR ALLOCATION OF RESOURCE LOCATION WITH FREQUENCY HOPPING FUNCTION**

(57) The present invention provides a method and device for allocation of resource location with frequency hopping function, the method including: obtaining uplink bandwidth of an LTE communication system; determining whether frequency hopping information is needed to be allocated to uplink continuous frequency domain resource location information under a multi-antenna port transmission mode, if so, obtaining, according to the uplink bandwidth, the length of resource location and hopping bit indicator and the length of the frequency domain resource location information; calculating the difference between the length of the resource location and hopping bit indicator and the length of the frequency domain resource location information to obtain a difference Value_D; and allocating frequency hopping information to the frequency domain resource location information according to Value_D. The technical solution can support the allocation of the frequency domain resource location information with frequency hopping function under a multi-port transmission mode.

**Fig. 1**

**Description**

Technical Field

The present invention relates to the technical field of mobile communications, and in particular, to a method and device for allocation of resource location with frequency hopping function under uplink multi-port transmission mode.

Background

In a 3GPP (The 3rd Generation Partnership Project) LTE (Long Term Evolution) frequency division multiplexing system, uplink data are sent over an uplink physical channel by using a single antenna, and resources are allocated in a continuous resource allocation manner. Since the resources cannot be utilized flexibly, for example, when there are a plurality of segment bands in the system bandwidth, the sending rate of uplink data is quite limited.

Compared with the above-mentioned system, the IMT-Advanced (International Mobile Telecommunications-Advanced) system has higher requirements on data rate and system capacity. In order to meet the requirements of IMT-Advanced, LTE-A (Long Term Evolution-Advanced), as the evolution standard of LTE, proposes an uplink non-continuous resource allocation technique, which technique can be used to improve the spectrum utilization rate of the IMT-Advanced system.

At the same time, in order to meet the uplink transmission rate requirements of IMT-Advanced, LTE-A proposes a multi-port transmission mode, under which mode, an uplink shared channel can support a plurality of transmission blocks. At uplink of the LTE-A system, UE (user equipment) can at most support to send two transmission blocks simultaneously.

The rapid development of digital communication systems proposes higher requirements on the reliability of data communications. However, over a deteriorated channel condition, system performance is severely affected by multipath interference and Doppler frequency shift. Therefore, in order to meet higher data rate requirements of the terminal, during uplink transmission, a method for allocation of resources under a multi-port is proposed in the aspect of resource allocation, so as to improve the probability of correct reception and the uploading data amount during data transmission.

However, in the existing LTE system, the existing downlink control information representation method does not support to allocate frequency hopping information for continuous resource location information with a frequency hopping function under a multi-port transmission mode. However, if a single field is opened up in the downlink control information to represent frequency hopping information, then the existing structure of the downlink control information will be changed.

Summary

In view of the above, the present invention provides a method and device for allocation of resource location with frequency hopping function so as to support the allocation of frequency domain resource location information with a frequency hopping function under a multi-port transmission mode.

The technical solution used in the present invention to solve the technical problem thereof is described as follows.

A method for allocation of resource location with frequency hopping function includes:

obtaining uplink bandwidth of a present Long Term Evolution (LTE) communication system;
determining whether frequency hopping information is needed to be allocated to uplink continuous frequency domain resource location information under a multi-antenna port transmission mode, and if the frequency hopping information is needed to be allocated, obtaining, according to the uplink bandwidth, the length of resource location and hopping bit indicator and the length of the frequency domain resource location information;
calculating the difference between the length of the resource location and hopping bit indicator and the length of the frequency domain resource location information to obtain a difference Value_D; and
allocating frequency hopping information to the frequency domain resource location information according to Value_D.

Preferably, allocating the frequency hopping information to the frequency domain resource location information according to Value_D includes:

if Value_D = 0, not enabling frequency hopping;
if Value_D = 1, not enabling the frequency hopping, and setting the value of one extra bit as 0 or 1;
if Value_D = 2 and 49 $\geq$ uplink bandwidth $\geq$ 6, using one bit for indicating whether the frequency hopping is enabled and the other one bit for indicating a frequency hopping type;

if Value_D = 2 and 110 ≥ uplink bandwidth ≥ 50, not enabling the frequency hopping;

if Value_D = 3 and 49 ≥ uplink bandwidth ≥ 6, using one bit for indicating whether the frequency hopping is enabled, and the other two bits for indicating the frequency hopping type; or using two bits for indicating whether the frequency hopping is enabled, and one bit for indicating the frequency hopping type; and

if Value_D = 3 and 110 ≥ uplink bandwidth ≥ 50, using one bit for indicating whether the frequency hopping is enabled, and the other two bits for indicating the frequency hopping type.

Preferably, after allocating the frequency hopping information to the frequency domain resource location information according to Value_D, the method further includes:

combining the frequency hopping information and the frequency domain resource location information, incorporating the frequency hopping information and the frequency domain resource location information into downlink control information, and sending the frequency hopping information and the frequency domain resource location information to a terminal via the downlink control information to instruct the terminal to send uplink data information.

Preferably, the frequency domain resource location information is placed at the most significant bit (MSB) side of the downlink control information, or placed at the least significant bit (LSB) side of the downlink control information; and bit information for indicating whether the frequency hopping is enabled is placed in front, and bit information for indicating the frequency hopping type is placed at back.

Preferably, obtaining the length of the resource location and hopping bit indicator includes: the length of the resource location and hopping bit indicator = $\left\lceil \log_2\left(\left(\begin{array}{c} \left\lceil N_{RB}^{UL}/P+n \right\rceil \\ 4 \end{array}\right)\right)\right\rceil$ or $\left\lceil \log_2\left(\left(\begin{array}{c} \left\lceil N_{RB}^{UL}/P \right\rceil+n \\ 4 \end{array}\right)\right)\right\rceil$, where n is an integer greater than 0, $N_{RB}^{UL}$ represents the uplink bandwidth, P represents a resource block group (RBG) size, and the value of P depends on the uplink bandwidth.

A device for allocation of resource location with frequency hopping function includes:

a bandwidth acquisition unit configured to obtain uplink bandwidth of a present Long Term Evolution (LTE) communication system;

an information determination unit configured to determine whether frequency hopping information is needed to be allocated to uplink continuous frequency domain resource location information under a multi-antenna port transmission mode, and if the frequency hopping information is needed to be allocated, obtain, according to the uplink bandwidth, the length of resource location and hopping bit indicator and the length of the frequency domain resource location information;

a calculation unit configured to calculate the difference between the length of the resource location and hopping bit indicator and the length of the frequency domain resource location information to obtain a difference Value_D; and

an allocation representation unit configured to allocate frequency hopping information to the frequency domain resource location information according to Value_D.

Preferably, the allocation representation unit is configured to allocate the frequency hopping information to the frequency domain resource location information according to Value_D in the following manner:

if Value_D = 0, not enabling frequency hopping;

if Value_D = 1, not enabling the frequency hopping, and setting the value of one extra bit as 0 or 1;

if Value_D = 2 and 49 ≥ uplink bandwidth ≥ 6, using one bit for indicating whether the frequency hopping is enabled and the other one bit for indicating a frequency hopping type;

if Value_D = 2 and 110 ≥ uplink bandwidth ≥ 50, not enabling the frequency hopping;

if Value_D = 3 and 49 ≥ uplink bandwidth ≥ 6, using one bit for indicating whether the frequency hopping is enabled, and the other two bits for indicating the frequency hopping type; or using two bits for indicating whether the frequency hopping is enabled, and one bit for indicating the frequency hopping type; and

if Value_D = 3 and 110 ≥ uplink bandwidth ≥ 50, using one bit for indicating whether the frequency hopping is enabled, and the other two bits for indicating the frequency hopping type.

Preferably, the device further includes: an information combination unit configured to combine the frequency hopping information and the frequency domain resource location information, incorporate the frequency hopping information and the frequency domain resource location information into downlink control information, and send the frequency hopping information and the frequency domain resource location information to a terminal via the downlink control information to instruct the terminal to send uplink data information.

Preferably, the frequency domain resource location information is placed at the most significant bit (MSB) side of the downlink control information, or placed at the least significant bit (LSB) side of the downlink control information; and bit information for indicating whether the frequency hopping is enabled is placed in front, and bit information for indicating the frequency hopping type is placed at back.

Preferably, the information determination unit is configured to obtain the length of the resource location and hopping bit indicator according to the following formula: the length of the resource location and hopping bit indicator =

$$\left\lceil \log_2\left(\binom{\lceil N_{RB}^{UL}/P + n \rceil}{4}\right)\right\rceil \text{ or } \left\lceil \log_2\left(\binom{\lceil N_{RB}^{UL}/P \rceil + n}{4}\right)\right\rceil,$$ where n is an integer greater than 0, $N_{RB}^{UL}$ represents the uplink bandwidth, P represents a resource block group (RBG) size, and the value of P depends on the uplink bandwidth.

In the present invention, $\binom{y}{x} = C_y^x$, that is, permutation and combination calculation, wherein $C_y^x = \dfrac{P_y^x}{x!}$.

The following beneficial effects could be produced by the implementation of the technical solution of the present invention: by way of allocating frequency hopping information to frequency domain resource location information according to the difference between the length of resource location and hopping bit indicator and the length of frequency domain resource location information, the method and device for allocation of resource location with frequency hopping function provided in the present invention can avoid the defect in the existing LTE system that frequency hopping cannot be performed under a multi-port transmission mode, thus achieving the purpose that frequency hopping information can be allocated to frequency domain resource location information under the multi-port transmission mode. At the same time, compared to the method of representing frequency hopping information and frequency domain resource location information separately, combining frequency hopping information and frequency domain resource location information in the downlink control information can achieve convergence with the control information under an uplink multi-port transmission mode in the existing LTE without introducing any change in the existing information structure of LTE. In addition, the method and device in the present invention can improve uplink data transmission efficiency.

Brief Description of the Drawings

Fig. 1 is a flowchart of a method provided in an embodiment of the present invention;
Fig. 2 is another flowchart of a method provided in an embodiment of the present invention;
Fig. 3 is a structural schematic diagram of a device provided in an embodiment of the present invention; and
Fig. 4 is another structural schematic diagram of a device provided in an embodiment of the present invention.

Detailed Description of the Embodiments

The basic concept of the embodiments of the present invention includes: obtaining uplink bandwidth of a present LTE communication system; determining whether frequency hopping information is needed to be allocated to the uplink continuous frequency domain resource location information under a multi-antenna port transmission mode, and if the frequency hopping information is needed to be allocated, obtaining the length of resource location and hopping bit indicator and the length of frequency domain resource location information according to the uplink bandwidth; calculating the difference between the length of the resource location and hopping bit indicator and the length of the frequency domain resource location information to obtain a difference Value_D; and allocating the frequency hopping information to the frequency domain resource location information according to Value_D.

In order to make the objective, the technical solution and the advantage of the present invention more clear, the present invention will be further described in details with reference to the embodiments and drawings below. It should be understood that the particular embodiments described here are merely for explaining the present invention, not for limiting the present invention.

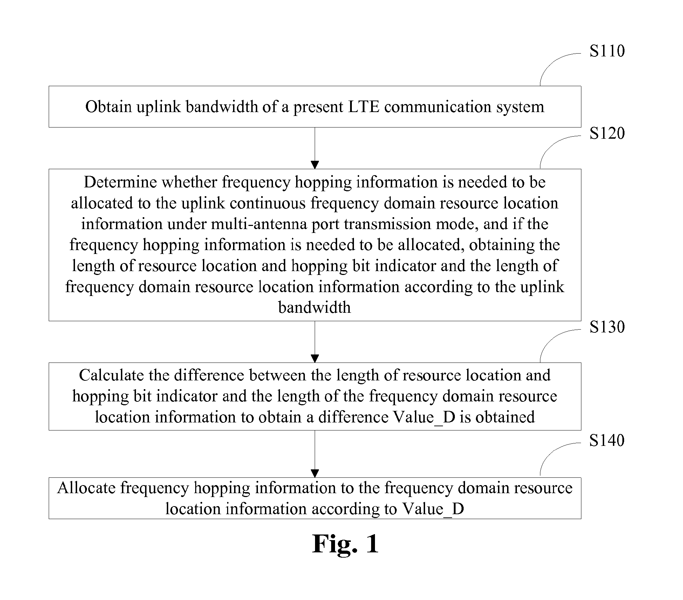

An embodiment of the present invention provides a method for allocation of resource location with frequency hopping function. As shown in Fig. 1, the method includes the following steps.

S110, uplink bandwidth $N_{RB}^{UL}$ of a present LTE communication system is obtained.

S 120, it is determined whether frequency hopping information is needed to be allocated to uplink continuous frequency domain resource location information under a multi-antenna port transmission mode, and if the frequency hopping information is needed to be allocated, the length of resource location and hopping bit indicator and the length of the frequency domain resource location information are obtained according to the uplink bandwidth.

The length of the resource location and hopping bit indicator $= \left\lceil \log_2\left(\left(\begin{array}{c} \lceil N_{RB}^{UL}/P + n \rceil \\ 4 \end{array}\right)\right)\right\rceil$ or

$\left\lceil \log_2\left(\left(\begin{array}{c} \lceil N_{RB}^{UL}/P \rceil + n \\ 4 \end{array}\right)\right)\right\rceil$, where n is an integer greater than 0, $N_{RB}^{UL}$ represents the uplink bandwidth, P represents a resource block group (RBG) size, and the value of P depends on the uplink bandwidth, particularly as shown in Fig.

1. The length of the frequency domain resource location information is the result of $\left\lceil \log_2(N_{RB}^{UL}(N_{RB}^{UL}+1)/2)\right\rceil$,

wherein $N_{RB}^{UL}$ is the uplink bandwidth. If the frequency hopping information is not needed to be allocated, exit the flow of this method.

Table 1

| Uplink bandwidth $N_{RB}^{UL}$ | RBG size (P) |
|---|---|
| ≤10 | 1 |
| 11-26 | 2 |
| 27-63 | 3 |
| 64-110 | 4 |

S103, the difference between the length of the resource location and hopping bit indicator and the length of the frequency domain resource location information is calculated to obtain a difference Value_D.

S 140, the frequency hopping information is allocated to the frequency domain resource location information according to Value_D. The frequency hopping information includes bit information for indicating whether the frequency hopping is enabled and bit information for indicating a frequency hopping type.

Table 2 is a correlation table of the length of a frequency hopping bit indicator and bit information:

Table 2

| Uplink bandwidth $N_{RB}^{UL}$ | Length of frequency hopping bit indicator | Bit information |
|---|---|---|
| 6-49 | 1 | 0 |
| | | 1 |
| 50-110 | 2 | 00 |
| | | 01 |
| | | 10 |
| | | 11 |

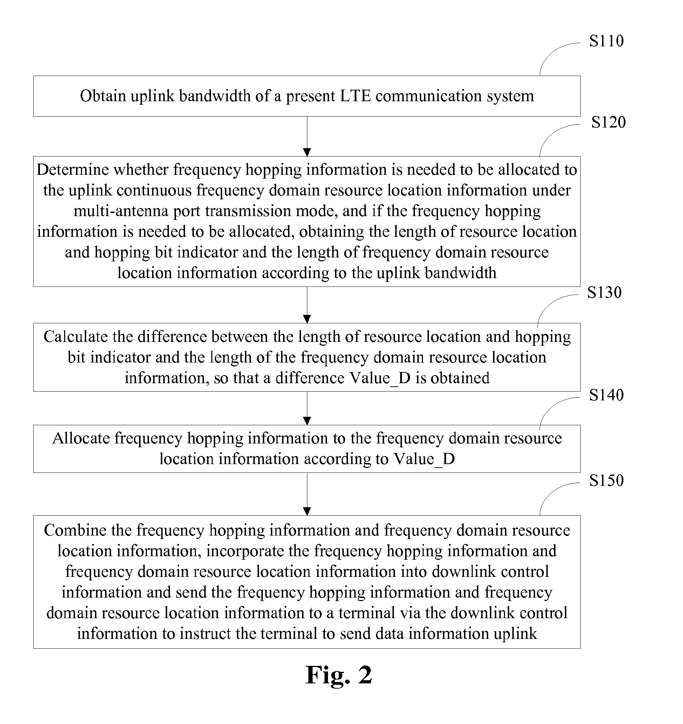

As shown in Fig. 2, in a more specific embodiment, step S 140 includes:

if Value_D = 0, then frequency hopping is not enabled;
if Value_D = 1, then frequency hopping is not enabled, and the value of one extra bit is set as 0 or 1;

if Value_D = 2 and uplink bandwidth $N_{RB}^{UL} \leq 49$ and $N_{RB}^{UL} \geq 6$, then one bit is used for indicating whether the frequency hopping is enabled and the other one bit is used for indicating a frequency hopping type;

if Value_D = 2 and uplink bandwidth $N_{RB}^{UL} \leq 110$ and $N_{RB}^{UL} \geq 50,$ then frequency hopping is not enabled;

if Value_D = 3 and uplink bandwidth $N_{RB}^{UL} \leq 49$ and $N_{RB}^{UL} \geq 6,$ then one bit is used for indicating whether the frequency hopping is enabled, and the other two bits are used for indicating the frequency hopping type; or two bits are used for indicating whether the frequency hopping is enabled, and one bit is used for indicating the frequency hopping type; that is

when two bits are used for indicating the frequency hopping type, the bit value which represents frequency hopping type 1 may be 00, 01, 10 or 11, it is only required that the bit value which represents frequency hopping type 2 is different from the bit value which represents frequency hopping type 1, and preferably, frequency hopping type 1 takes 00 and frequency hopping type 2 takes 11;

when two bits are used for indicating whether the frequency hopping is enabled, the bit value which represents that the frequency hopping is enabled may be 00, 01, 10 or 11, it is only required that the bit value which represents that the frequency hopping is not enabled is different from the bit value which represents that the frequency hopping is enabled, it is recommended that the bit value 00 represents that the frequency hopping is not enabled, and the bit value 11 represents that the frequency hopping is enabled;

if Value_D = 3 and uplink bandwidth $N_{RB}^{UL} \leq 110$ and $N_{RB}^{UL} \geq 50,$ then one bit is used for indicating whether the frequency hopping is enabled and the other two bits are used for indicating the frequency hopping type.

By way of allocating frequency hopping information to frequency domain resource location information according to the difference between the length of the resource location and hopping bit indicator and the length of the frequency domain resource location information, the method can avoid the defect in the existing LTE system that frequency hopping cannot be performed under a multi-port transmission mode, thus achieving the purpose that frequency hopping information can be allocated to frequency domain resource location information under the multi-port transmission mode.

In another embodiment, the result of the formula $\left\lceil \log_2(N_{\mathrm{RB}}^{\mathrm{UL}}(N_{\mathrm{RB}}^{\mathrm{UL}}+1)/2) \right\rceil$ is the length of the frequency domain resource location information. After step S 104, as shown in Fig. 2, the method further includes:

S 150, the frequency hopping information and the frequency domain resource location information are combined and incorporated into downlink control information and sent to a terminal via the downlink control information to instruct the terminal to send uplink data information. Compared to the method of representing the frequency hopping information and the frequency domain resource location information separately, combining the frequency hopping information and the frequency domain resource location information in the downlink control information can achieve convergence with the control information under an uplink multi-port transmission mode in the existing LTE without introducing any change in the existing information structure of LTE,. In addition, the uplink data transmission rate can be improved.

In the above-mentioned embodiments, preferably, the frequency hopping information is placed at the MSB (most significant bit) side of the downlink control information, the frequency domain resource location information is placed at the LSB (least significant bit) side of the downlink control information; or, the frequency hopping information is placed at the LSB side of the downlink control information, the frequency domain resource location information is placed at the MSB side of the downlink control information. Bit information for indicating whether the frequency hopping is enabled is placed in front, and bit information for indicating the frequency hopping type is placed at back; or, bit information for indicating whether the frequency hopping is enabled type is placed at back, and bit information for indicating the frequency hopping type is placed in front. The frequency hopping information includes bit information for indicating whether the frequency hopping is enabled and bit information for indicating the frequency hopping type.

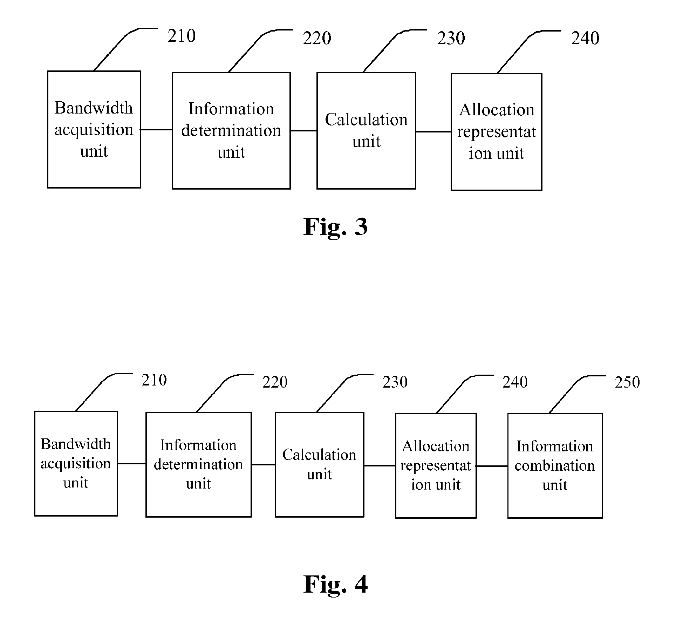

An embodiment of the present invention also provides a device for allocation and representation of resource location with frequency hopping function, which device is a network-side device. As shown in Fig. 3, the device includes:

a bandwidth acquisition unit 210 configured to obtain uplink bandwidth $N_{RB}^{UL}$ of a present LTE communication system;

an information determination unit 220 configured to determine whether frequency hopping information is needed to be allocated to the uplink continuous frequency domain resource location information under a multi-antenna port transmission mode, and if the frequency hopping information is needed to be allocated, obtain the length of resource location and hopping bit indicator and the length of the frequency domain resource location information according to the uplink bandwidth, wherein the length of the resource location and hopping bit indicator is

$$\left\lceil \log_2\left(\binom{\left\lceil N_{RB}^{UL}/P+n\right\rceil}{4}\right)\right\rceil \text{ or } \left\lceil \log_2\left(\binom{\left\lceil N_{RB}^{UL}/P\right\rceil+n}{4}\right)\right\rceil,$$ where n is an integer greater than 0, $N_{RB}^{UL}$ represents the uplink bandwidth, P represents a resource block group (RBG) size, and the value of P depends on the uplink bandwidth; and the length of the frequency domain resource location information is

$$\left\lceil \log_2(N_{RB}^{UL}(N_{RB}^{UL}+1)/2)\right\rceil ;$$

a calculation unit 230 configured to calculate the difference between the length of the resource location and hopping bit indicator and the length of the frequency domain resource location information to obtain a difference Value_D; and an allocation representation unit 240 configured to allocate frequency hopping information to the frequency domain resource location information according to Value_D.

In a more specific embodiment, the allocation representation unit 240 is configured to:

if Value_D = 0, not enable frequency hopping;

if Value_D = 1, not enable the frequency hopping, and set the one extra bit value as 0 or 1;

if Value_D = 2 and uplink bandwidth $N_{RB}^{UL} \leq 49$ and $N_{RB}^{UL} \geq 6,$ use one bit for indicating whether the frequency hopping is enabled and the other one bit for indicating a frequency hopping type;

if Value_D = 2 and uplink bandwidth $N_{RB}^{UL} \leq 110$ and $N_{RB}^{UL} \geq 50,$ not enable the frequency hopping;

if Value_D = 3 and uplink bandwidth $N_{RB}^{UL} \leq 49$ and $N_{RB}^{UL} \geq 6,$ use one bit for indicating whether the frequency hopping is enabled and the other two bits for indicating the frequency hopping type, or use two bits for indicating whether the frequency hopping is enabled and one bit for indicating the frequency hopping type; that is:

when two bits are used for indicating the frequency hopping type, the bit value which represents frequency hopping type 1 may be 00, 01, 10 or 11, it is only required that the bit value which represents frequency hopping type 2 is different from the bit value which represents frequency hopping type 1, and preferably, frequency hopping type 1 takes 00 and frequency hopping type 2 takes 11;

when two bits are used for indicating whether the frequency hopping is enabled, the bit value which represents that the frequency hopping is enabled may be 00, 01, 10 or 11, it is only required that the bit value which represents that the frequency hopping is not enabled is different from the bit value which represents that the frequency hopping is enabled, it is recommended that the bit value 00 represents that the frequency hopping is not enabled, and the bit value 11 represents that the frequency hopping is enabled;

if Value_D = 3 and uplink bandwidth $N_{RB}^{UL} \leq 110$ and $N_{RB}^{UL} \geq 50,$ use one bit for indicating whether the frequency hopping is enabled and the other two bits for indicating the frequency hopping type.

By way of allocating frequency hopping information to frequency domain resource location information according to the difference between the length of resource location and hopping bit indicator and the length of the frequency domain resource location information, the device can avoid the defect in the existing LTE system that frequency hopping cannot be performed under a multi-port transmission mode, thus achieving the purpose that frequency hopping information can be allocated to frequency domain resource location information under the multi-port transmission mode.

In another embodiment, on the basis of the above-mentioned embodiments, as shown in Fig. 4, the device may further include: an information combination unit 250 configured to combine the frequency hopping information and frequency domain resource location information, incorporate the frequency hopping information and frequency domain resource location information into downlink control information and send the frequency hopping information and frequency domain resource location information to a terminal via the downlink control information to instruct to the terminal to send uplink data information. The downlink control information is sent to a terminal so as to instruct the terminal to send uplink data information. Compared to the method of representing frequency hopping information and frequency domain resource location information separately, combining frequency hopping information and frequency domain resource location information in downlink control information can achieve convergence with the control information under an uplink multi-port transmission mode in the existing LTE without introducing any change in the existing information structure of LTE. In addition, the uplink data transmission rate can be improved.

In the above-mentioned embodiments, preferably, the frequency hopping information is placed at the MSB (most significant bit) side of the downlink control information, the frequency domain resource location information is placed at the LSB (least significant bit) side of the downlink control information; or, the frequency hopping information is placed at the LSB side of the downlink control information, the frequency domain resource location information is placed at the MSB side of the downlink control information. Bit information for indicating whether the frequency hopping is enabled is placed in front, and bit information for indicating the frequency hopping type is placed at back; or, bit information for indicating whether the frequency hopping is enabled type is placed at back, and bit information for indicating the frequency hopping type is placed in front. The frequency hopping information includes bit information for indicating whether the frequency hopping is enabled and bit information for indicating the frequency hopping type.

In the embodiments of the present invention, $\begin{pmatrix} y \\ x \end{pmatrix} = C_y^x$ that is, permutation and combination calculation, where-

in $C_y^x = \dfrac{P_y^x}{x!}$ .

The above are only preferred embodiments of the present invention and not intended to limit the scope of protection of the present invention; any modifications, equivalent replacements, improvements and the like within the spirit and principle of the present invention shall fall within the scope of protection of the present invention.

## Claims

1. A method for allocation of resource location with frequency hopping function, **characterized by** comprising:

    obtaining uplink bandwidth of a present Long Term Evolution (LTE) communication system;
    determining whether frequency hopping information is needed to be allocated to uplink continuous frequency domain resource location information under a multi-antenna port transmission mode, and if the frequency hopping information is needed to be allocated, obtaining, according to the uplink bandwidth, the length of resource location and hopping bit indicator and the length of the frequency domain resource location information;
    calculating the difference between the length of the resource location and hopping bit indicator and the length of the frequency domain resource location information to obtain a difference Value_D; and
    allocating frequency hopping information to the frequency domain resource location information according to Value_D.

2. The method as claimed in claim 1, **characterized in that** allocating the frequency hopping information to the frequency domain resource location information according to Value_D comprises:

    if Value_D = 0, not enabling frequency hopping;
    if Value_D = 1, not enabling the frequency hopping, and setting the value of one extra bit as 0 or 1;
    if Value_D = 2 and 49 $\geq$ uplink bandwidth $\geq$ 6, using one bit for indicating whether the frequency hopping is enabled and the other one bit for indicating a frequency hopping type;
    if Value_D = 2 and 110 $\geq$ uplink bandwidth $\geq$ 50, not enabling the frequency hopping;
    if Value_D = 3 and 49 $\geq$ uplink bandwidth $\geq$ 6, using one bit for indicating whether the frequency hopping is enabled, and the other two bits for indicating the frequency hopping type; or using two bits for indicating whether the frequency hopping is enabled, and one bit for indicating the frequency hopping type; and

if Value_D = 3 and 110 ≥ uplink bandwidth ≥ 50, using one bit for indicating whether the frequency hopping is enabled, and the other two bits for indicating the frequency hopping type.

3. The method as claimed in claim 2, **characterized in that** after allocating the frequency hopping information to the frequency domain resource location information according to Value_D, the method further comprises:

combining the frequency hopping information and the frequency domain resource location information, incorporating the frequency hopping information and the frequency domain resource location information into downlink control information, and sending the frequency hopping information and the frequency domain resource location information to a terminal via the downlink control information to instruct the terminal to send uplink data information.

4. The method as claimed in claim 3, **characterized in that** the frequency domain resource location information is placed at the most significant bit (MSB) side of the downlink control information, or placed at the least significant bit (LSB) side of the downlink control information; and bit information for indicating whether the frequency hopping is enabled is placed in front, and bit information for indicating the frequency hopping type is placed at back.

5.
The method as claimed in claim 3, **characterized in that** obtaining the length of the resource location and hopping bit indicator comprises: the length of the resource location and hopping bit indicator $= \left\lceil \log_2\left(\left(\begin{array}{c}\left\lceil N_{RB}^{UL}/P+n\right\rceil \\ 4\end{array}\right)\right)\right\rceil$ or

$\left\lceil \log_2\left(\left(\begin{array}{c}\left\lceil N_{RB}^{UL}/P\right\rceil+n \\ 4\end{array}\right)\right)\right\rceil$, where n is an integer greater than 0, $N_{RB}^{UL}$ represents the uplink bandwidth, P represents a resource block group (RBG) size, and the value of P depends on the uplink bandwidth.

6. A device for allocation of resource location with frequency hopping function, **characterized by** comprising:

a bandwidth acquisition unit configured to obtain uplink bandwidth of a present Long Term Evolution (LTE) communication system;
an information determination unit configured to determine whether frequency hopping information is needed to be allocated to uplink continuous frequency domain resource location information under a multi-antenna port transmission mode, and if the frequency hopping information is needed to be allocated, obtain, according to the uplink bandwidth, the length of resource location and hopping bit indicator and the length of the frequency domain resource location information;
a calculation unit configured to calculate the difference between the length of the resource location and hopping bit indicator and the length of the frequency domain resource location information to obtain a difference Value_D; and
an allocation representation unit configured to allocate frequency hopping information to the frequency domain resource location information according to Value_D.

7. The device as claimed in claim 6, **characterized in that** the allocation representation unit is configured to allocate the frequency hopping information to the frequency domain resource location information according to Value_D in the following manner:

if Value_D = 0, not enabling frequency hopping;
if Value_D = 1, not enabling the frequency hopping, and setting the value of one extra bit as 0 or 1;
if Value_D = 2 and 49 ≥ uplink bandwidth ≥ 6, using one bit for indicating whether the frequency hopping is enabled and the other one bit for indicating a frequency hopping type;
if Value_D = 2 and 110 ≥ uplink bandwidth ≥ 50, not enabling the frequency hopping;
if Value_D = 3 and 49 ≥ uplink bandwidth ≥ 6, using one bit for indicating whether the frequency hopping is enabled, and the other two bits for indicating the frequency hopping type; or using two bits for indicating whether the frequency hopping is enabled, and one bit for indicating the frequency hopping type; and
if Value_D = 3 and 110 ≥ uplink bandwidth ≥ 50, using one bit for indicating whether the frequency hopping is enabled, and the other two bits for indicating the frequency hopping type.

8. The device as claimed in claim 6, **characterized by** further comprising:

an information combination unit configured to combine the frequency hopping information and the frequency domain resource location information, incorporate the frequency hopping information and the frequency domain resource location information into downlink control information, and send the frequency hopping information and the frequency domain resource location information to a terminal via the downlink control information to instruct the terminal to send uplink data information.

9. The device as claimed in claim 8, **characterized in that** the frequency domain resource location information is placed at the most significant bit (MSB) side of the downlink control information, or placed at the least significant bit (LSB) side of the downlink control information; and bit information for indicating whether the frequency hopping is enabled is placed in front, and bit information for indicating the frequency hopping type is placed at back.

10.

The device as claimed in claim 7, **characterized in that** the information determination unit is configured to obtain the length of the resource location and hopping bit indicator according to the following formula: the length of the resource location and hopping bit indicator = $\left\lceil \log_2 \left( \left( \begin{array}{c} \left\lceil N_{RB}^{UL} / P + n \right\rceil \\ 4 \end{array} \right) \right) \right\rceil$ or

$\left\lceil \log_2 \left( \left( \begin{array}{c} \left\lceil N_{RB}^{UL} / P \right\rceil + n \\ 4 \end{array} \right) \right) \right\rceil$, where n is an integer greater than 0, $N_{RB}^{UL}$ represents the uplink bandwidth, P represents a resource block group (RBG) size, and the value of P depends on the uplink bandwidth.

S110

| Obtain uplink bandwidth of a present LTE communication system |
|---|

S120

| Determine whether frequency hopping information is needed to be allocated to the uplink continuous frequency domain resource location information under multi-antenna port transmission mode, and if the frequency hopping information is needed to be allocated, obtaining the length of resource location and hopping bit indicator and the length of frequency domain resource location information according to the uplink bandwidth |
|---|

S130

| Calculate the difference between the length of resource location and hopping bit indicator and the length of the frequency domain resource location information to obtain a difference Value_D is obtained |
|---|

S140

| Allocate frequency hopping information to the frequency domain resource location information according to Value_D |
|---|

**Fig. 1**

Fig. 2

210     220     230     240

| Bandwidth acquisition unit | Information determination unit | Calculation unit | Allocation representat ion unit |

**Fig. 3**

210    220    230    240    250

| Bandwidth acquisition unit | Information determination unit | Calculation unit | Allocation representat ion unit | Information combination unit |

**Fig. 4**

<table>
<tr><td colspan="2" align="center"><strong>INTERNATIONAL SEARCH REPORT</strong></td><td>International application No.<br>PCT/CN2011/083474</td></tr>
</table>

**A. CLASSIFICATION OF SUBJECT MATTER**

see the extra sheet

According to International Patent Classification (IPC) or to both national classification and IPC

**B. FIELDS SEARCHED**

Minimum documentation searched (classification system followed by classification symbols)

IPC: H04W; H04Q; H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC: frequency hopping, resource, distribut+, long term evolution, antenna?, port?, multi, multiple, bandwidth, uplink, frequency domain, location, length, difference, control information

**C. DOCUMENTS CONSIDERED TO BE RELEVANT**

| Category* | Citation of document, with indication, where appropriate, of the relevant passages | Relevant to claim No. |
|---|---|---|
| A | CN101778475A (HUAWEI TECHNOLOGIES CO., LTD.) 14 Jul. 2010 (14.07.2010) the whole document | 1-10 |
| A | CN101771444A (DATANG MOBILE COMMUNICATION EQUIPMENT CO., LTD.) 07 Jul. 2010 (07.07.2010) the whole document | 1-10 |
| A | CN101394199A (ZTE CORP.) 25 Mar. 2009 (25.03.2009) the whole document | 1-10 |
| A | WO2008/113720A1 (NOKIA SIEMENS NETWORKS GMBH & CO. KG et al.) 25 Sep. 2008 (25.09.2008) the whole document | 1-10 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 Feb. 2012 (22.02.2012) | 15 Mar. 2012 (15.03.2012) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>ZHANG, Qi<br><br>Telephone No. (86-10)62413298 |

Form PCT/ISA /210 (second sheet) (July 2009)

## INTERNATIONAL SEARCH REPORT
### Information on patent family members

| | International application No. |
|---|---|
| | PCT/CN2011/083474 |

| Patent Documents referred in the Report | Publication Date | Patent Family | Publication Date |
|---|---|---|---|
| CN101778475A | 14.07.2010 | None | |
| CN101771444A | 07.07.2010 | None | |
| CN101394199A | 25.03.2009 | WO2010048831A1 | 06.05.2010 |
| WO2008/113720A1 | 25.09.2008 | EP1971171A1 | 17.09.2008 |

Form PCT/ISA /210 (patent family annex) (July 2009)

# INTERNATIONAL SEARCH REPORT

| International application No. |
| --- |
| PCT/CN2011/083474 |

CLASSIFICATION OF SUBJECT MATTER:

H04W 72/04 (2009.01) i

H04B 1/7136 (2011.01) i

Form PCT/ISA /210 (extra sheet) (July 2009)